# EUROPEAN PATENT APPLICATION

(11) **EP 4 122 322 A1**
(43) Date of publication of application: **25.01.2023**
(21) Application number: 21187547.1
(22) Date of filing: 23.07.2021
(51) Int. Cl.: A22C 21/00

(54) **A CUTTING ASSEMBLY AND MACHINE FOR CUTTING A COOKED FOOD PIECE**

(30) Priority: 21.07.2021 PT 2021117356
(71) Applicant: Sersounox - Equipamentos Para Indústria Alimentar, Lda, 2590-429 Sobral De Monte Agraço (PT)
(72) Inventor: CARVALHO DE SOUSA, José António, 2590-418 Sobral de Monte Agraço (PT)
(74) Representative: do Nascimento Gomes, Rui

(57) **Abstract**

The present disclosure is enclosed in the area of food cutting, including equipment and machines suitable for cutting food products such as cooked meat, of which cutting cooked chicken - such as whole grilled chicken - is a relevant example. It is an object of the present disclosure a cutting assembly (10) for cutting a cooked food piece. The cutting assembly (10) may comprise at least one blade (12) and at least one retractable element (13) which is positioned adjacently to said at least one blade (12) and which comprises a first part (13-1) which is jointly coupled to the base element (11) and a second part (13-2) which is movable with respect to the first part (13-1) between a rest position (rp1) and a retracted position (rp2), wherein the second part (13-2) is elastically movable from the retracted position (rp2) to the rest position (rp1).

## Description

### TECHNICAL FIELD

The present disclosure is enclosed in the area of food cutting, including equipment and machines suitable for cutting food products such as cooked meat, of which cutting cooked chicken - such as whole grilled chicken - is a relevant example.

### PRIOR ART

Numerous solutions are known in the art to industrially cut meat products, mainly focusing on the cutting of raw meat, for subsequent packaging and sale.

These solutions may take different levels of complexity, concentrating on elements such as the ability to cut even portions of meat - as is the case with patent document US 2006/156878 A1- or to improve the efficiency of the industrial process - as is the case with patent document EP 0 067 462 A1.

Patent document KR 10-2151100 B1 discloses a moulding apparatus for uniformly cutting chicken meat, through the provision of a mould having a specific configuration, wherein a chicken is fixed to the mould and grooves provided in the mould allow to cut the chicken while it moves along a conveyor belt.

As referred, these solutions are focused on the cutting of raw meat pieces.

Food products, in particular meat products, which are to be marketed in raw form and meat products which are to be marketed in a packaged form typically resort to these solutions.

Yet, few solutions exist for the automatic cutting of meat products which are cooked on site and subsequently sold to a direct customer. For instance, take-away services of barbecue shops typically resort to the manual cutting of the cooked meat pieces - such as whole poultry. These shops - which may consist of large supermarkets - may process hundreds or thousands of meat pieces per day, requiring reliable and automatized equipment.

The existing solutions are typically not adapted for the automatic or enhanced cutting of cooked meat pieces, consisting of machines which may cut a variety of different kinds of food product, as is the case of the solution of patent document KR 10-2008-0036857 A.

The solution of the present disclosure overcomes such issues, providing an enhanced and particularly adapted solution of the cutting of cooked food pieces, including cooked meat pieces.

### SUMMARY OF THE DISCLOSURE

It is an object of the present disclosure a cutting assembly for cutting a cooked food piece, optionally a cooked meat piece. Several embodiments are subsequently described in respect of a cooked meat piece. Yet, they are entirely applicable to a cooked food piece. In an embodiment, the cutting assembly comprises a base element, at least one blade which is jointly coupled to the base element and at least one retractable element which is positioned adjacently to said blade and which comprises a first part which is jointly coupled to the base element and a second part which is movable with respect to the first part between a rest position and a retracted position. The retractable element is configured and positioned such that, upon a pressing of the cutting assembly against the cooked meat piece, the cooked meat piece pushes the second part of the retractable element and thereby is cut by the at least one blade, the second part moving with respect to the first part from the rest position towards the retracted position and, upon stopping the pressing of the cutting assembly against the cooked meat piece, the second part elastically moves back to the rest position.

In an embodiment, the cutting assembly comprises two or more blades, wherein the at least one retractable element is provided adjacently to at least two of said blades.

In an embodiment more than one retractable element is provided adjacently to a same blade.

In a further embodiment, each of the said more than one retractable elements which are provided adjacently to a same blade are adjacently provided to each other, at least to one other of such retractable elements.

In another embodiment, the second part comprises a plane portion which, when the second part is in the rest position, is adjacently provided and substantially aligned with the edges of said blades.

In yet another embodiment, each first part is fixedly coupled or whole with the base element and each respective second part of the retractable element is elastically movable between a rest position and a retracted position by means of a resilient element, optionally a spring, optionally the first part having a hollow tube form and the second part having a coupling portion which fits the hollow tube and rests against the resilient element.

In an embodiment, the plane portion and the coupling portion being whole or the plane portion and the coupling portion being separate elements which are fixedly coupled, optionally screwed.

In another embodiment, at least one blade is positioned such that it is perpendicular and intersects with another blade.

In a further embodiment, one blade is provided centrally with regard to the base element and more than one perpendicular blade is provided, the perpendicular blades being parallel to each other, the intersection between each perpendicular blade and the centrally provided blade being halfway or substantially halfway such perpendicular blade.

In a further embodiment, the two or more blades comprise at least two additional blades, each provided transversally to the said at least two perpendicularly provided blades, such that one of the ends of each additional blade is arranged adjacently to one of the perpendicularly provided blades and the other of the ends is arranged adjacently to the other of the perpendicularly provided blades, wherein the first additional blade is in a first placement and the second additional blade is in a second placement, the second placement mirroring the first placement with regard to one of the said perpendicularly provided blades.

In yet a further embodiment, the assembly further comprises coupling means, the coupling means providing the fixed coupling of each of the blades to the base element, optionally the coupling means comprising i) projections provided on the base element, the projections comprising perforations, ii) at least two perforations provided on each blade, and iii) coupling pins, bolts or screws, each pin, bolt or screw passing through a perforation of each projection and of each blade.

It is also an object of the present disclosure a cooked meat piece cutting machine. In an embodiment, the cutting machine comprises the cutting assembly of the present disclosure, in any of its embodiments, and a straight surface provided substantially in parallel with the cutting assembly.

In an embodiment, the cutting machine comprises moving means movable and able to move the cutting assembly between a first cutting position provided away from the said surface and a second cutting position which is such that, in the second position, the cutting assembly is pressed against a cooked meat piece provided on the surface and the blades thereby cut the cooked meat piece and, simultaneously, the cooked meat piece pushes the second part such that it moves with respect to the first part from the rest position towards the retracted position, and
wherein, optionally, the machine further comprises a controller and the said movement of the moving means is controllable by the controller, and
wherein, optionally, the second cutting position is such that:
   i) the edges of the blades touch or nearly touch the surface, or
   ii) the surface has slots suitable for the blades to pass through and the blades thereby pass through the surface in the second cutting position.

It is also an object of the present disclosure the use of the cutting assembly, in any of its embodiments. In an embodiment, of such use, the cooked meat piece is provided on a straight surface substantially in parallel with the cutting assembly, and the cutting assembly is pressed against the surface, such that the blades press the cooked meat piece, the cooked meat piece pushing the second part and thereby being cutting by the blades, the second part moving with respect to the first part from the rest position towards the retracted position.

In another embodiment of the use, the cooked meat piece is:
a whole meat piece, and/or
poultry, optionally a chicken, optionally a grilled chicken.

### DESCRIPTION OF FIGURES

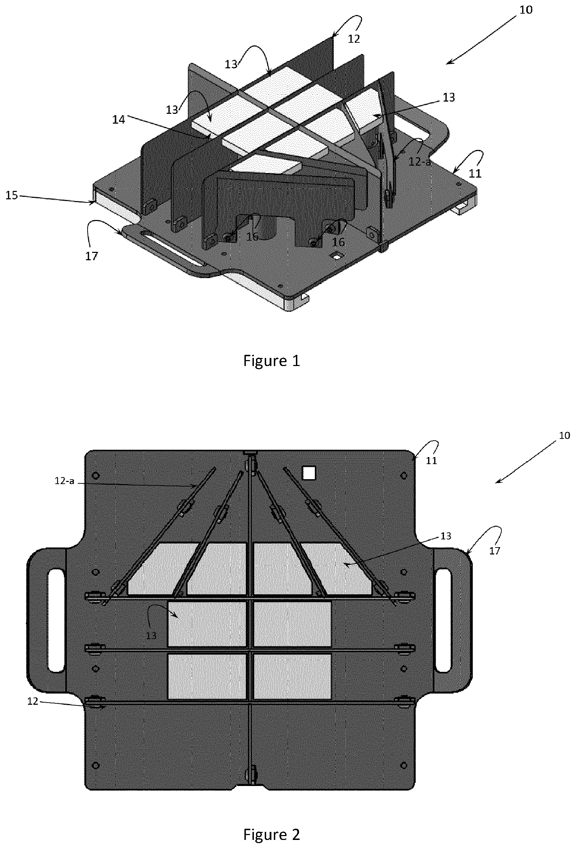

Figure 1 - perspective view of an embodiment of the cutting assembly (10) of the present disclosure. The cutting assembly (10) comprises a base element (11) in which a centrally provided blade (12) is provided. Three parallel blades (12) are perpendicularly provided with regard to the centrally provided blade. Such parallel blades (12) intersect the centrally provided blade. In between the blades (12), retractable elements (13) are provided. The blades (12) are connected to the base element (11) by means of pins. Two sets of two retractable elements (13) are provided on each side of the centrally provided blade. Those sets are, simultaneously, provided in between two of the three parallel blades (12). Moreover, four additional blades (12-a) transversally provided are comprised. Two of those blades (12) are on one side of the centrally provided blade, and the other two are provided on the other side of such blade, mirroring the first two additional blades (12-a). In between each two additional blades (12-a) on one of the sides, a retractable element (13) is provided. Adjacently to each additional blade (12-a) which is closer to the centrally provided blade (12) is provided another retractable element. Thus, the retractable elements (13) cover the spaces provided between the blades (12), allowing to - as was described before and will be described in more detail - detach cut pieces from the blades (12). In addition, laterally arranged guiding projections (15) are provided, one on each side of the base element (11). Also, on each side of the base element (11) are handles (17).
Figure 2 - top view of the embodiment of the cutting assembly (10) of the present disclosure, corresponding to Fig. 1. The shape of the retractable elements (13) can be seen, wherein four retractable elements (13) are rectangular, two retractable elements (13) are trapezoidal, and two retractable elements (13) are substantially rhomboid. The position of the blades (12) is also better seen. Two of the additional blades (12-a)-those further away from the centrally provided blades (12) - form angles of around 45° with respect to the other blades (12).

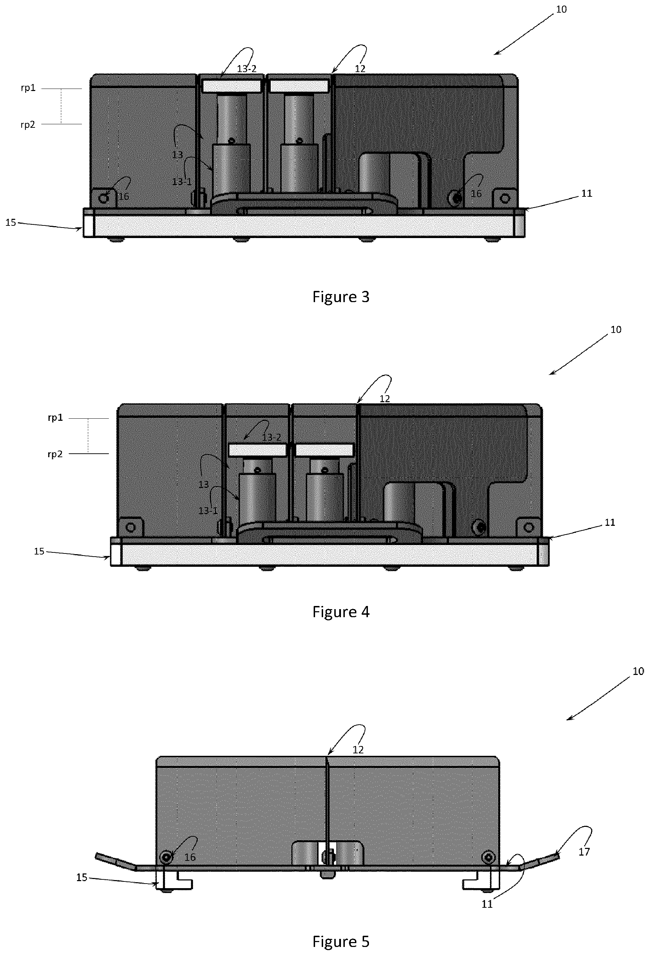

Figure 3 - side view of the embodiment of the cutting assembly (10) of the present disclosure, corresponding to figures 1 and 2. The two represented retractable elements (13) are in the rest position (rp1).
Figure 4 - side view of the embodiment of the cutting assembly (10) of the present disclosure, corresponding to figure 4. The two represented retractable elements (13) are in the retracted position (rp2).

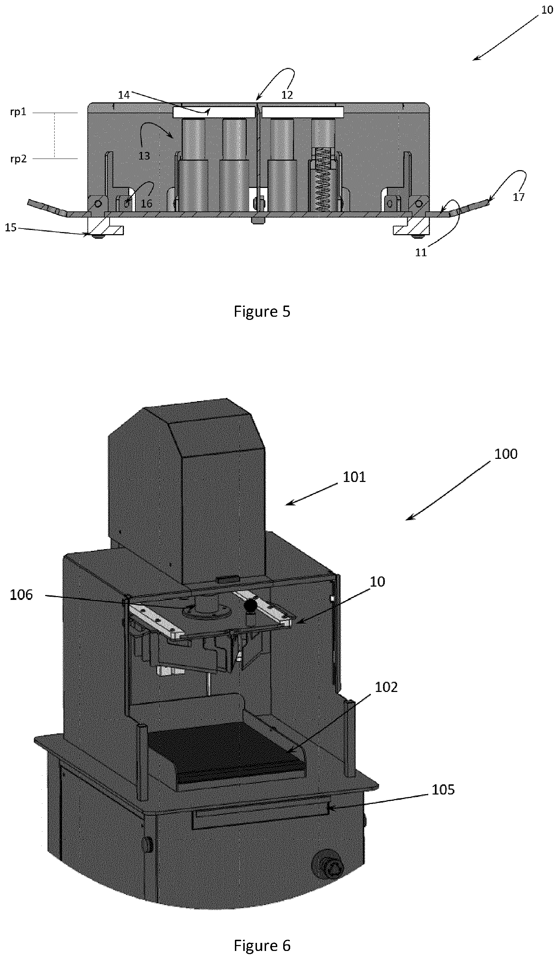

Figure 5 - side view of the embodiment of the cutting assembly (10) of the present disclosure, corresponding to figures 1 to 4.
Figure 6 - section view of the embodiment of the cutting assembly (10) of the present disclosure. A spring-loaded plunger is provided in each retractable element, wherein it is only shown in the retractable element (13) provided on the right.

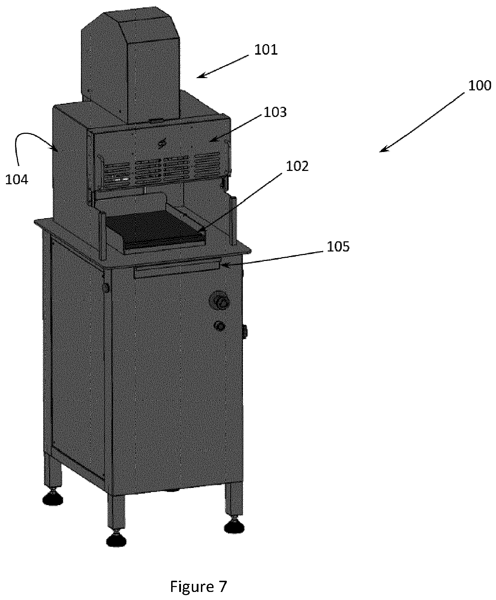

Figure 7 - perspective view of a part an embodiment of the cutting machine (100) of the present disclosure. It comprises the cutting assembly (10) represented in the embodiments of figures 1-6. Such cutting assembly (10) is coupled to moving means (106), which allow to move it between the position represented in the figure, a first cutting position, and a second cutting position (not shown) in which the cutting assembly (10) is able to cut a cooked meat piece provided on the cutting surface or board (102). Three lateral guards (104) are provided. Moreover, the cutting means are a part of the head (101) of the machine. A drawer (105) is also represented.
Figure 8 - perspective view of a whole embodiment of the cutting machine (100) of the present invention. It further comprises, with regard to the embodiment of figure 7, a movable guard (103) is represented, hiding the cutting assembly (10) provided in the first cutting position. The cutting machine (100) has a body in which further machinery - such as an electrical engine (or other type of engine) may be provided. Such body is supported in four feet (three are shown).

### DETAILED DESCRIPTION

The more general and advantageous configurations of the present disclosure are described in the Summary of the disclosure. Such configurations are detailed below in accordance with other advantageous and/or preferred embodiments of implementation.

The cutting assembly (10) may comprise a base element (11), to which the at least one blade (12) and the at least one retractable element (13) are jointly coupled or fixed. The blade (12) and the retractable element (13) thereby move jointly with the base element (11).

The retractable element (13) has two parts, a first part (13-1) which is fixed and a second part (13-2) which is movable. Specifically, the second part (13-2) is movable with respect to the first part (13-1) between a rest position (rp1) and a retracted position (rp2). When pressed from the rest position (rp1) to the retracted position (rp2), the second part (13-2) is able to elastically move back to the rest position (rp1). Thus, when the cutting assembly (10) is moved against a cooked meat piece, the base element (11), the at least one blade (12) and the at least one retractable element (13) move jointly. The blade or blades (12) and the retractable element (13) are pressed against the cooked meat piece, wherein the retractable element (13) - as above described - is pushed towards the retracted position (rp2) by the cooked meat piece, while the blades (12) remain pushing - and, thus cutting - the cooked meat piece.

Such movement allows for the cutting of the meat piece since the elastic retraction of the second part (13-2) of the retractable element (13) allows to expose the blades (12) or blades (12) against the cooked meat piece, cutting it along the position of the blades (12) or blades (12).

The at least one retractable element (13) is, in its rest position (rp1), positioned adjacently to at least one blade, as is the case in the embodiment of Figure 4. When the assembly is not pushed against the cooked meat piece, the retractable element (13) remains in such position. When the assembly is pushed against the cooked meat piece, the above described movement occurs, pushing the retractable element (13) - in particular its second part (13-2) - towards its retracted position (rp2), thereby exposing the at least one blade, which cuts the cooked meat piece. Figures 3 and 4 show an example of such movement. When the referred pushing or pressing stops, the retractable element (13) - in particular its second part (13-2) - elastically returns to its original position -the rest position (rp1).

Thus, when moving from the rest to the retracted position (rp2), the retractable element (13) is pushed by the cooked meat piece. Then, when moving from the retracted to the rest position (rp1), retractable element (13) pushes the cooked meat piece. Such pushing of the cooking meat piece helps to detach from the cutting assembly (10) any fragment or bit of the cut meat piece which may have attached to the cutting assembly (10) during cutting. For instance, the skin of a grilled chicken is rather sticky, and may remain attached to the blade, resulting in the separation of the skin from the rest of the grilled chicken during cutting (in particular, when the assembly and thereby the blades (12) are moved away from the cooked meat piece). Such results in an inferior product, since the separated skin and the meat will cool down faster, and the juices will also dry faster. The appearance of the resulting product is also inferior. The elastic movement of the second part (13-2) from the retracted position (rp2) into the rest position (rp1) allows, as described, to maintain the integrity of the cut grilled chicken.

Such description is entirely applicable to other kinds of poultry or other meat products.

The assembly may comprise two or more blades (12), wherein the at least one retractable element (13) is provided adjacently to at least two of said blades (12). The provision of the retractable element (13) adjacently to the blades (12) allows, as previously described, to better push the cooked meat piece, alongside the moving away movement of the blades (12) with respect to the cooked meat piece. Figures 1-6 show examples of the provision of the retractable elements (13) adjacently to the blades (12). When a retractable element (13) is in its rest position (rp1), its second part (13-2) - which may form a plane portion (14) - may be aligned with the edge of the at least one blade, of which examples are represented in Figures 3, 4 and 6. The plane portion (14) may be entirely or partially formed of food-graded polyethylene, polyethylene or another suitable material.

The second part (13-2) may take a form which substantially fills a space between the edges of two blades (12). For instance, for two blades (12) provided in parallel, one or more retractable elements (13) - more than one retractable element (13) may be provided adjacently to a same blade (12) - may substantially fill the space provided between the edges of such two parallel blades (12), through the respective arrangement and form of the second part (13-2) of each retractable element. An example of such arrangement is presented in Figures 1 and 2.

As referred, the blades (12) and retractable elements (13) are adjacently provided, wherein the second parts (13-2) of the retractable elements (13) and the edges of the blades (12) may be so arranged that are substantially in a same plane.

It may be that the assembly comprises two blades (12) and a single retractable element, which is provided in between the blades (12) and thereby adjacently to each blade. It may be that the assembly comprises two blades (12) provided in parallel and a plurality of retractable elements (13) arranged in between those two blades (12), adjacently to one another and to the blades (12). An efficient occupation of the space in between blades (12), and thereby an efficiency increase in the detachment of the cooked meat piece from the blades (12), can be provided.

In an embodiment, at least one blade (12) is positioned such that it is perpendicular and intersects with another blade. Thus, it may be that the assembly comprises two blades (12) perpendicular provided to each other, and four retractable elements (13), each of such elements being adjacently provided to the two blades (12), and thereby adjacently provided to each of the four corners which the intersection of the blades (12) forms. Such an arrangement allows for the simultaneous cutting of the cooked meat piece into at least four portions, and to the consequent enhanced pushing of the cooked meat piece by the respective second parts (13-2) of the retractable elements (13).

The second part (13-2) may comprise a plane portion (14) which, when the second part (13-2) is in the rest position (rp1), is adjacently provided and substantially aligned with the edges of said blades (12). Each first part (13-1) may be fixedly coupled or whole with the base element (11). Thus, each respective second part (13-2) of the retractable element (13) may be elastically movable between a rest position (rp1) and a retracted position (rp2) by means of a resilient element. The resilient element may be provided between the first part (13-1) and the second part (13-2), and it may consist of a spring, such as a helicoidal spring. When the assembly is moved against the cooked meat piece, the second part (13-2) moves towards the retracted position (rp2), and the resilient element is compressed by the second part (13-2). When the assembly is moved away from the cooked meat piece, the second part (13-2) moves away from the retracted position (rp2) and again towards the rest position (rp1), thereby being pushed back by the resilient element in an elastic manner. The first part (13-1) may have a hollow tube form and the second part (13-2) may have a coupling portion which fits the hollow tube and rests against the resilient element. The plane portion (14) and the coupling portion may be whole or separate elements which are fixedly coupled, optionally screwed to one another. The resilient element may further be configured as a spring-loaded plunger.

The assembly may comprise at least two additional blades (12-a), each provided transversally to the said at least two perpendicularly provided blades (12), such that one of the ends of each additional blade (12-a) is arranged adjacently to one of the perpendicularly provided blades (12) and the other of the ends is arranged adjacently to the other of the perpendicularly provided blades (12). Such arrangement is presented in Figures 1 and 2, and allows to transversally and automatically cut the cooked meat piece into several portions, defined by the arrangement of the blades (12) and the so-called additional blades (12-a). In such configuration, the first additional blade (12-a) is in a first placement and the second additional blade (12-a) is in a second placement, the second placement mirroring the first placement with regard to one of the said perpendicularly provided blades (12), as in the example of Figures 1 and 2.

In an embodiment, the form of each retractable element (13) is adapted to the arrangement of the blades (12) or blades (12) to which it is adjacently provided. It may be that the arrangement of the second part (13-2), more particularly the plane portion (14), is adapted to the arrangement of the blades (12) or blades (12) to which it is adjacently provided. As in the example of Figures 1 and 2, it may be that the retractable element (13) has a substantially rectangular second part (13-2) [or its plane portion (14)], typically when provided between two parallel blades (12). As in the example of Figures 1 and 2, it may be that the retractable element (13) has a substantially triangular or trapezoidal second part (13-2) [or its plane portion (14)], typically when provided between two perpendicularly provided blades (12) which intersect and a third blades (12) which is transversally provided to those two perpendicular blades (12), in the form previously described. It may also be - as in the example of Figures 1 and 2 - that the that the retractable element (13) has a substantially triangular, rhomboid or trapezoidal second part (13-2) [or its plane portion (14)], typically when provided between two perpendicularly provided blades (12) which intersect and a third blade (12) which is transversally provided to those two perpendicular blades (12), in the form previously described.

Coupling means may provide a fixed coupling of each of the blades (12) to the base element (11). The coupling means may comprise i) projections provided on the base element (11), the projections comprising perforations, ii) at least two perforations provided on each blade, and iii) coupling pins, bolts or screws, each pin, bolt or screw passing through a perforation of each projection and of each blade. Figures 1 to 6 consist of possible examples. The projections of coupling means may specifically comprise laterally arranged guiding projections (15), which enhance the coupling of the cutting assembly (10) to moving means (106) which may automatically move the cutting assembly (10). The projections may comprise or be entirely formed of polyethylene, food-graded polyethylene or another suitable material.

The base element (11) may have any suitable form, such as rectangular form. It may further comprise specific coupling means, such that it may be fixedly coupled to another element, such as a moving part of a machine.

The base element (11) may be substantially plane, thus simplifying the arrangement of the blades (12) and retractable elements (13) which, as referred, are adjacently provided.

The base element (11) may comprise laterally arranged handles (17), which allow for the placement and removal of the base assembly in a machine.

Several embodiments of the cutting machine (100) of the present invention are subsequently described.

The cutting machine (100) may comprise moving means (106) movable and able to move the cutting assembly (10) between a first cutting position provided away from the said surface and a second cutting position. The first cutting position may be said to be provided away from the surface in which the cooked meat piece is placed in order to be cut and the second cutting position may be said to be close, immediately adjacent or intersecting the surface. The surface may consist of a board (102), the board (102) may comprise or be entirely formed food-graded polyethylene or another suitable materia l.

The moving means (106) may take any form, for instance being electrically powered and hydraulically or pneumatically actuated. Other forms known in the art are suitable. The moving means (106) may be provided above the surface such that the cutting assembly (10) is approachable to the surface as above described.

In particular, in the second position, the cutting assembly (10) may be pressed against a cooked meat piece provided on the surface and the blades (12) thereby cut the cooked meat piece and, simultaneously, the cooked meat piece pushes the second part (13-2) such that it moves with respect to the first part (13-1) from the rest position (rp1) towards the retracted position (rp2).

The cutting machine (100) may further perform a movement of the moving means (106) from the second position towards the first position, thereby moving the cutting assembly (10) away from the surface. As described in respect of the cutting assembly (10), the second part (13-2) of the retractable element (13) will thus move towards the rest position (rp1) in an elastic manner, thus also pushing the cooked meat piece and providing its efficient detachment.

The machine may further comprise a controller. The said movement of the moving means (106) may be controllable by the controller, which thus controls the movement of the moving means (106) and, consequently, the cutting assembly (10), between the first and the second positions.

Moreover, the second cutting position may be such that i) the edges of the blades (12) touch or nearly touch the surface, or ii) the surface has slots suitable for the blades (12) to pass through and the blades (12) thereby pass through the surface in the second cutting position.

The cutting machine (100) may further comprise a rail suitable for the provision of the cutting assembly (10). In an embodiment, the coupling means, formed by the laterally provided guiding projections (15) of the cutting assembly (10) fit in the rail (not shown in the figures).

Moreover, the section of the cutting machine (100) in which the cutting assembly (10) is to be provided may be designated as the head (101) of the cutting machine (100). The head (101) is provided above the surface in which a meat piece is to be placed for cutting, as shown in Figures 7 and 8.

The head (101) may comprise the moving means (106), which may comprise actuation means which - through hydraulic, pneumatic or other mechanism, as previously described-allow to move the moving means (106) towards and away from the cutting surface, as previously described.

Moreover, the head (101) may further comprise, adjacently to the rail, a movable guard (103), which allows or prevents the ability to place or remove the cutting assembly (10) to or from the rail. An embodiment of a movable guard (103) is presented in the embodiment of Figure 8.

The cutting machine (100) may further comprise one or more lateral guards (104), which laterally prevent the access to the area between the first cutting position and the second cutting position. An embodiment of the lateral guards (104) are represented in the embodiment of Figures 7 and 8.

The cutting machine (100) may further comprise a plurality of slots provided below the cutting surface and a chamber provided below such slots. The chamber thereby collects bits or remains of cut cooked meat. Moreover, the cutting machine (100) may further comprise a drawer (105) provided in the chamber, and to which the bits or remains are collected. The drawer (105) is accessible and removable, as is the case in the example of Figures 7 and 8.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A cutting assembly (10) for cutting a cooked food piece, optionally a meat piece, **characterised in that** it comprises a base element (11), at least one blade (12) which is jointly coupled to the base element (11) and at least one retractable element (13) which is positioned adjacently to said at least one blade (12) and which comprises a first part (13-1) which is jointly coupled to the base element (11) and a second part (13-2) which is movable with respect to the first part (13-1) between a rest position (rp1) and a retracted position (rp2),
the retractable element (13) being configured and positioned such that, upon a pressing of the cutting assembly (10) against the cooked food piece, the cooked food piece pushes the second part (13-2) of the retractable element (13) and thereby is cut by the at least one blade, the second part (13-2) moving with respect to the first part (13-1) from the rest position (rp1) towards the retracted position (rp2) and, upon stopping the pressing of the cutting assembly (10) against the cooked food piece, the second part (13-2) elastically moves back to the rest position (rp1).

2. An assembly according to the previous claim wherein it comprises two or more blades (12), wherein the at least one retractable element (13) is provided adjacently to at least two of said blades (12).

3. An assembly according to the previous claim wherein more than one retractable element (13) is provided adjacently to a same blade.

4. An assembly according to the previous claim wherein each of the said more than one retractable elements (13) which are provided adjacently to a same blade (12) are adjacently provided to each other, at least to one other of such retractable elements (13).

5. An assembly according to any of the preceding claims wherein the second part (13-2) comprises a plane portion (14) which, when the second part (13-2) is in the rest position (rp1), is adjacently provided and substantially aligned with the edges of said blades (12).

6. An assembly according to any of the preceding claims wherein each first part (13-1) is fixedly coupled or whole with the base element (11) and each respective second part (13-2) of the retractable element (13) is elastically movable between a rest position (rp1) and a retracted position (rp2) by means of a resilient element, optionally a spring, optionally the first part (13-1) having a hollow tube form and the second part (13-2) having a coupling portion which fits the hollow tube and rests against the resilient element.

7. An assembly according to claims 5 and 6 wherein the plane portion (14) and the coupling portion being whole or the plane portion (14) and the coupling portion being separate elements which are fixedly coupled, optionally screwed.

8. An assembly according to any of the preceding claims wherein at least one blade (12) is positioned such that it is perpendicular and intersects with another blade.

9. An assembly according to the previous claim wherein one blade (12) is provided centrally with regard to the base element (11) and more than one perpendicular blades (12) are provided, the perpendicular blades (12) being parallel to each other, the intersection between each perpendicular blades (12) and the centrally provided blades (12) being halfway or substantially halfway such perpendicular blade.

10. An assembly according to any of the claims 8-9 wherein the two or more blades (12) comprise at least two additional blades (12-a), each provided transversally to the said at least two perpendicularly provided blades (12), such that one of the ends of each additional blade (12-a) is arranged adjacently to one of the perpendicularly provided blades (12) and the other of the ends is arranged adjacently to the other of the perpendicularly provided blades (12), wherein
the first additional blade (12-a) is in a first placement and the second additional blade (12-a) is in a second placement, the second placement mirroring the first placement with regard to one of the said perpendicularly provided blades (12).

11. An assembly according to the previous claim wherein it further comprises coupling means, the coupling means providing the fixed coupling of each of the blades (12) to the base element (11), optionally the coupling means comprising i) projections provided on the base element (11), the projections comprising perforations, ii) at least two perforations provided on each blade, and iii) coupling pins, bolts or screws, each pin, bolt or screw passing through a perforation of each projection and of each blade.

12. Cooked food piece cutting machine (100), optionally a cooked meat piece cutting machine, **characterised in that** it comprises the cutting assembly (10) of any of the preceding claims and a straight surface provided substantially in parallel with the cutting assembly (10).

13. Cutting machine (100) according to the previous claim wherein it comprises moving means (106) movable and able to move the cutting assembly (10) between a first cutting position provided away from the said surface and a second cutting position which is such that, in the second position, the cutting assembly (10) is pressed against a cooked food piece provided on the surface and the blades (12) - optionally a cooked meat piece-thereby cut the cooked meat food and, simultaneously, the cooked food piece pushes the second part (13-2) such that it moves with respect to the first part (13-1) from the rest position (rp1) towards the retracted position (rp2), and wherein, optionally, the machine further comprises a controller and the said movement of the moving means (106) is controllable by the controller, and
wherein, optionally, the second cutting position is such that:
i) the edges of the blades (12) touch or nearly touch the surface, or
ii) the surface has slots suitable for the blades (12) to pass through and the blades (12) thereby pass through the surface in the second cutting position.

14. Use of the cutting assembly (10) of any of the claims 1-11 wherein the cooked food piece, optionally a cooked meat piece, is provided on a straight surface substantially in parallel with the cutting assembly (10), and the cutting assembly (10) is pressed against the surface, such that the blades (12) press the cooked food piece, the cooked food piece pushing the second part (13-2) and thereby being cutting by the blades (12), the second part (13-2) moving with respect to the first part (13-1) from the rest position (rp1) towards the retracted position (rp2).

15. Use of the cutting assembly (10) of any of the claims 1-11 or use according to claim 14 wherein the cooked meat piece is:
a whole meat piece, and/or
poultry, optionally a chicken, optionally a grilled chicken.
